# EUROPÄISCHE PATENTSCHRIFT

(11) **EP 1 431 112 B1**
(45) Veröffentlichungstag und Bekanntmachung des Hinweises auf die Patenterteilung: **05.07.2006**
(21) Anmeldenummer: 03029272.6
(22) Anmeldetag: 22.12.2003
(51) Int. Cl.: B60N 3/00, A47C 7/70

(54) **Klapptischanordnung für Fahrzeuge**
Foldable tray for vehicle.
Tablette pliante pour véhicule.

(30) Priorität: 21.12.2002 DE 10260503
(43) Veröffentlichungstag der Anmeldung: 23.06.2004
(73) Patentinhaber: ADAM OPEL AG, 65423 Rüsselsheim (DE); Lear Corporation, Southfield, MI 48034 (US)
(72) Erfinder: Lindström, Martin, 65193 Wiesbaden (DE); Stein, Volker, 65205 Wiesbaden (DE)
(74) Vertreter: Daniel, Ulrich W.P.

(56) Entgegenhaltungen:
- EP-A- 0 380 429
- WO-A-00/21793
- DE-A- 10 026 561
- DE-U- 29 603 294
- US-A- 4 852 940
- US-A- 6 086 129
- US-B1- 6 427 957

## Beschreibung

Die Erfindung betrifft eine Klapptischanordnung für Fahrzeuge, bei der der Klapptisch aus einer vertikal orientierten Ruhelage, insbesondere innerhalb einer Multifunktionskonsole zwischen den äußeren Fondsitzen eines Personenkraftwagens herausziehbar und in seine horizontal orientierte Gebrauchslage klappbar ist.

Aus dem Deutschen Gebrauchsmuster DE-U-296 03 294 ist eine Klapptischanordnung bekannt geworden, die an der Mittelkonsole eines Kraftfahrzeuges angeordnet ist. Dazu sind an zwei gegenüberliegenden Stirnwänden im Inneren der Konsole Kulissenführungen angebracht, denen jeweils ein Tischplattenteil zugeordnet ist. Die Tischplattenteile liegen im eingeschobenen Zustand vertikal in einem Freiraum der Konsole, der beispielsweise durch eine herausnehmbare Aufbewahrungsbox ausgefüllt werden kann, die durch eine Abdeckklappe verschließbar ist. Zur Herstellung einer Tischfläche werden die Abdeckklappen geöffnet und ein Tischplattenteil wird herausgezogen. Durch eine Zwangsführung über Zapfen wird zugleich mit dem Herausheben eine Verschwenkung des Tischplattenteils in die Gebrauchsstellung durchgeführt. Zwei Kulissenführungen stützen dabei die Tischplatte ab, eine Arretierung erfolgt in der Kulissenführung. Die Versenkung der Tischplatten erfolgt in der umgekehrten Reihenfolge. Nachteilig ist der durch die Kulissenführungen erforderliche Platzbedarf und die starre Ausrichtung der Tische, die in dieser Weise nur als Ablagetisch neben dem Passagier Verwendung finden können.

Andere Ablagetische sind im Zusammenhang mit Mittelkonsolen von Fahrzeugen beispielsweise aus der US-A-6 086 129 und der WO-A-00/21793 bekannt. Letztere Publikation beschreibt eine Mittelkonsole, aus der ein aus zwei Teilen zusammengesetzter Ablagetisch seitlich ausschwenkbar ist, wobei die Teile über ein Parallelogramm-Hebelsystem bewegt werden. Die Tischhälften liegen im ausgeschwenkten Zustand stufig versetzt übereinander. Ein solches Teil ist als Tisch kaum nutzbar, sein Wert liegt allenfalls in den vergrößerten Ablagemöglichkeiten.

Die US-A-6,086,129 beschreibt eine Mittelkonsole zwischen den Frontsitzen eines PKW. Seitlich der Konsole sind vertikal orientierte Aufnahmefächer für Tischplatten vorgesehen, in die diese aufrecht stehend einschiebbar sind. Durch Anheben und Herausziehen der Tischplatten aus den Aufnahmefächern und Klappen in eine horizontale Position entsteht ein seitlich in den Bereich vor dem Passagier reichender Tisch, der durch Festklemmen in dem Aufnahmefach gehalten wird. Der Tisch ist unflexibel, die Handhabung schwierig, das Einschieben und Herausziehen ist nicht ergonomisch.

Ähnlich problematisch ist die Handhabung eines Klapptisches, wie er in der DE-A-100 26 561 offenbart ist. Die dort beschriebene Tischanordnung ist insbesondere dem Fahrer zugeordnet und besteht aus einem seitlich neben dem Fahrersitz angeordneten Aufnahmegehäuse für die Platten, die zum Gebrauch herausgezogen und um ein Scharnier in die horizontale Lage geklappt werde. Das Aufnahmegehäuse selbst wird dazu in der Vertikalen nach oben geschwenkt und bildet eine Art Tischfuß. Das System ist kompliziert und benötigt viel Platz.

Aufgabe der vorliegenden Erfindung ist die Schaffung eines zur Seite ausklappbaren Tisches der gattungsgemäßen Art, der bei ausreichender Größe durch leichte mechanische Handhabung vollständig wegklappbar ist, und insbesondere in das Innere einer Multifunktionsbox versenkbar ist, die für die Passagiere auf den Fondsitzen eines PKW zugängig ist.

Zur Lösung der Aufgabe wird eine Klapptischanordnung für Fahrzeuge vorgeschlagen, die erfindungsgemäß durch ein Schwenkscharnier gekennzeichnet ist, das aus einer den Kantenbereich der Tischplatte umgreifenden Profilkralle besteht, die um eine parallel zu der von der Profilkralle umgriffenen Kante orientierte Schwenkachse, um einen Winkel von etwa 90° verschwenkbar, an einer Drehvorrichtung befestigt ist, mit deren Hilfe die Profilkralle zusammen mit der Tischplatte um eine quer zu der Schwenkachse der Kralle orientierte, im wesentlichen horizontale Drehachse, um einen Drehwinkel von etwa 90° verdrehbar ist.

Die Klapptischanordnung nach der Erfindung ermöglicht das Wegklappen und Ausklappen des Tisches durch Drehung um nur einen Punkt. Dadurch wird die Handhabung des Tisches deutlich einfacher, der Platzbedarf im Ruhezustand geringer. Alle für das Verschwenken des Tisches notwendigen Bauteile sind in der einen Drehvorrichtung vereinigt, die ausreichend stabil ausgeführt ist, um den auftretenden Belastungen zu genügen. Die Verdrehung des Tisches in zwei aufeinander senkrecht stehenden Ebenen um jeweils etwa 90° ermöglicht alle notwendigen Einstellungen auch ohne aufwendige Kulissenführungen. Die Drehvorrichtung ist preiswert herzustellen und genügt den Anforderungen voll und ganz.

Dabei hat es sich als besonders günstig erwiesen, wenn nach einer Ausgestaltung der Erfindung die Tischplatte innerhalb der Profilkralle und parallel zu der Schwenkachse zwischen zwei Endstellungen stufenlos verschiebbar ist. Die Verschiebbarkeit ermöglicht einerseits ein platzsparendes Einklappen und Lagern der Tischplatte in der Ruhestellung und andererseits ein benutzerfreundliches Verstellen des Tisches bei Gebrauch. Die Verschiebung innerhalb der Profilkralle ist technisch einfach zu erreichen, die Endstellungen der Verschiebewege werden durch Anschläge begrenzt.

Die Drehvorrichtung besteht nach einer günstigen Ausgestaltung der Erfindung aus zwei koaxial angeordneten Teilen, von denen das eine feste Teil an einem mit dem Fahrzeug verbundenen Rahmen befestigt ist und das andere Teil gegenüber dem festen Teil um die gemeinsame horizontale Mittelachse verdrehbar ist, wobei die Verdrehbewegung des verdrehbaren Teils durch Endanschläge in dem festen Teil begrenzt ist. Der mit dem Fahrzeug verbundene Rahmen kann Teil einer Armlehne oder einer Multifunktionsbox sein, oder aber Teil einer tragenden Struktur innerhalb einer Multifunktionsbox, die ihrerseits fest mit dem Fahrzeug gekoppelt ist. Da der Klapptisch lediglich aus der einen Endstellung (Ruhestellung) in die andere Endstellung (Gebrauchsstellung) verschwenkt werden muss, kann die Drehbewegung durch Endanschläge festgelegt sein, die für zusätzliche Stabilität in den beiden Endstellungen sorgen.

Besonders günstig ist es, wenn das verdrehbare Teil topfförmig ausgebildet ist, und mit seinem Innenumfang am Außenumfang des im Wesentlichen scheibenförmigen festen Teils und/oder an einem am festen Teil ausgebildeten zentralen, das verdrehbare Teil durchdringenden Zapfen geführt ist. Mit einer solchen Ausbildung lässt sich die Klapptischanordnung sehr stabil und dennoch einfach verwirklichen.

Vorteilhaft ist es, wenn am äußeren Umfang des verdrehbaren Teils die eine Hälfte des zusammen mit der Profilkralle gebildeten Schwenkscharniers ausgebildet ist und bodenseitig im topfförmigen Teil eine zur Drehachse mit konstantem radialen Abstand orientierte Nut vorgesehen ist, deren Umfangserstreckung dem Drehwinkel des verdrehbaren Teils entspricht und die von einem am festen Teil vorgesehenen Zapfen dergestalt durchdrungen wird, so dass die Enden der Nut die beiden Endanschläge für die Verdrehbewegung des verdrehbaren Teils bilden.

Ebenfalls zur sicheren Positionierung des Tisches ist in einer Ausgestaltung der Erfindung am festen oder am beweglichen Teil eine radial gegen Federdruck verschiebbare Sperre vorgesehen, die in eine entsprechende Ausnehmung am jeweils anderen Teil einrastet, sobald die Drehvorrichtung eine vorgegebene Verdrehstellung erreicht hat. Beispielsweise ist die Sperre als federbelasteter Riegel ausgestaltet, der am festen Teil in einer radial verlaufenden Nut geführt ist. Sobald eine entsprechend ausgebildete Aussparung im Innenumfang des drehenden Teiles den Riegel passiert, rastet dieser ein und blockiert eine weitere Verdrehung des Drehteiles und damit des in der Profilkralle gehaltenen Tisches. Dieser ist dann nur noch in Richtung seiner Längskante verschiebbar.

Um den Klapptisch in seiner Gebrauchslage statisch zu halten und ein Abklappen nach unten zu verhindern, ist in einer besonders günstigen Ausgestaltung der Erfindung an der den Klapptisch abgewandten Seite der Profilkralle ein Zugblech um eine parallel zur Schwenkachse verlaufende Achse gelenkig gelagert, so dass das Schwenkscharnier übergreifend in den Bereich der Drehvorrichtung ragt, wo sich das Zugblech in der Gebrauchsstellung des Tisches mit einem an der Drehvorrichtung vorgesehen Widerlager verhakt und dabei ein Zugglied als Widerlager für den Klapptisch bildet. Die auf den Klapptisch wirkenden Zugkräfte werden somit sicher aufgenommen, eine weitere Unterstützung des frei auskragenden Tisches kann entfallen.

In einer weiteren Ausgestaltung dieser Haltevorrichtung für den Klapptisch weist das Zugblech mindestens eine Ausnehmung auf, die einen am Drehteil oder an der dem Drehteil zugeordneten Hälfte des Schwenkscharniers ausgebildeten Nocken hintergreift, sobald der Klapptisch in seine Gebrauchslage geklappt ist. Vorzugsweise sind zwei dieser Nocken jeweils einer von zwei Ausnehmungen zugeordnet, um das Gewicht des Tisches und der darauf abgelegten Gegenstände sicher zu tragen.

Das Zugblech verriegelt selbsttätig, wenn der Klapptisch in seine Gebrauchslage geklappt wird. Zum Hochklappen des Tisches wird in einer Ausgestaltung der Erfindung das Zugblech über eine an dem Nocken ausgebildete Führungsfläche aus seiner Verriegelungsstellung bewegt. Bevorzugt soll das Zugblech so angeordnet und dimensioniert sein, dass das Verschwenken des Tisches erst ermöglicht wird, wenn der Klapptisch in der Vertikalstellung ist, die seiner späteren Ruhelage entspricht.

Soll beispielsweise der Klapptisch in einen engen definierten Aufnahmeschlitz, etwa innerhalb einer Multifunktionsbox eingeschwenkt werden, so muss die vertikale Stellung der Tischplatte schon oberhalb der Aufnahmeöffnung erreicht sein. Um das zu erreichen ist erfindungsgemäß vorgesehen, dass das Zugblech beim Hochschwenken des Tisches gleichzeitig die gegen Federdruck radial verschiebbare Sperre entriegelt. Dazu drückt das Zugblech gegen einen am Riegel vorgesehenen Vorsprung und drückt den Riegel am Ende der Verschwenkbewegung des Tisches aus seiner Verriegelungsstellung. Auf diese Weise wird die Verschwenkbarkeit der Drehvorrichtung und des Schwenkscharniers erst dann freigegeben, wenn der Klapptisch in seiner Vertikalstellung angelangt ist. Die Federkraft des Riegels wird dabei spürbar überwunden.

Die Erfindung lässt sich besonders günstig anwenden, wenn das Schwenkscharnier an einer Multifunktionsbox zwischen zwei Sitzen eines Personenkraftwagens angeordnet ist und die Tische zwischen dem Gehäuse der Multifuhktionsbox und einem innerhalb der Multifunktionsbox gebildeten Fach, vorzugsweise Kühlfach in vertikaler Stellung versenkbar sind. Die Vorrichtung ist äußerst platzsparend, so dass nur sehr wenig Stauraum oder Kühlraum der Multifunktionsbox verloren geht. Die in der Multifunktionsbox vorgesehene stabile Tragstruktur eines Rahmens gibt dem Schwenkscharnier den notwendigen Halt und die erforderliche Stabilität.

Vorteilhaft lässt sich die Multifunktionsbox zwischen den äußeren Fondsitzen eines Personenkraftwagens anordnen, so dass die Tische nach Öffnen der die Multifunktionsbox verschließenden Armlehne herausbewegbar sind.

Wenn gewünscht oder erforderlich, kann jeder der Tische zweigeteilt sein und durch einen Klappmechanismus in eine der Ruhestellung entsprechende Stellung klappbar sein, in der die Tischhälften dicht aufeinander liegen.

Ein Ausführungsbeispiel der Erfindung ist in der Zeichnung dargestellt und wird nachfolgend beschrieben. Es zeigt:
- Fig. 1: Das Funktionsprinzip der erfindungsgemäßen Klapptischanordnung grob schematisch,
- Fig. 2: einen vereinfachten Querschnitt durch das Schwenkscharnier der Erfindung mit horizontalem Klapptisch,
- Fig. 3: das Schwenkscharnier der Erfindung nach Fig. 2 mit vertikal geschwenkten Klapptisch und
- Fig. 4: den Drehschwenkbeschlag der erfindungsgemäßen Klapptischanordnung in einer Explosionszeichnung.

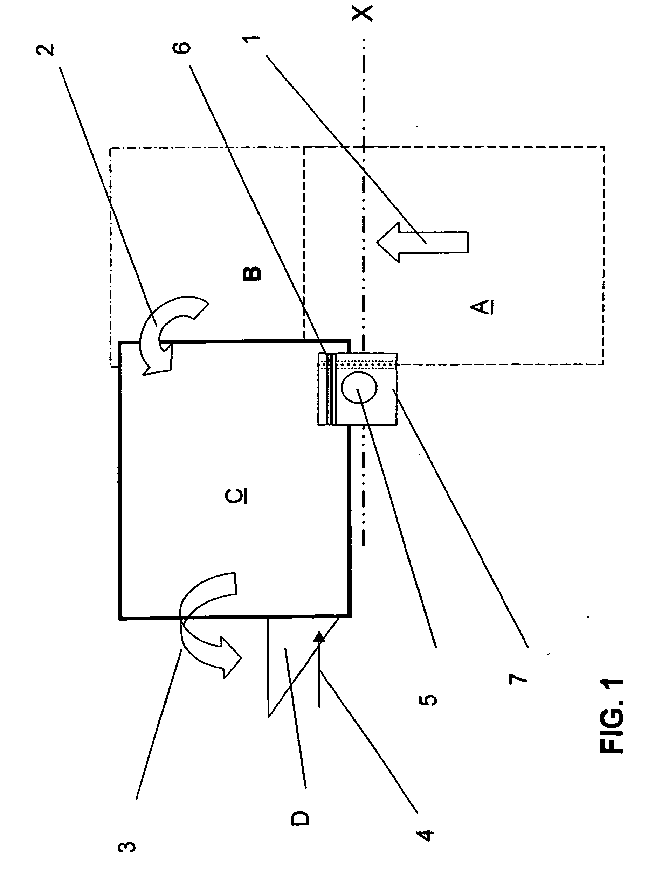

Figur 1 zeigt zunächst in sehr grob vereinfachter Darstellung das Funktionsprinzip der erfindungsgemäßen Klapptischanordnung mit den verschiedenen Schritten des Aufbaus. Die Mechanik der Klapptischanordnung wird später noch ausführlicher beschrieben. Die angedeutete Tischplatte ist in den verschiedenen in Figur 1 dargestellten Aufbaustellungen mit A - D bezeichnet. In der Ruhestellung A befindet sich die gestrichelt gezeichnete Tischplatte in ihrer vollkommen versenkten Lage, beispielsweise im Inneren einer Multifunktionsbox, deren oberer Rand bei X angedeutet sein soll. Die Tischplatte wird zum Aufbau des Tisches aus der Stellung A in Pfeilrichtung 1 in einer bei 6 gestrichelt angedeuteten Führung des bei 7 angedeuteten Schwenkscharniers und dessen Ausbildung später noch ausführlicher beschrieben wird, nach oben herausgeschoben, bis ein Anschlag an der Tischplatte die Verschiebebewegung in der strichpunktiert gezeichneten Stellung B begrenzt. Sodann wird die in der Stellung B befindliche Tischplatte um die senkrecht zur Zeichnungsebene orientierte Drehachse 5 in Pfeilrichtung 2 um 90° geschwenkt, wodurch die Tischplatte in die in vollen Linien gezeichnete Stellung C gelangt. Durch Klappen der Tischplatte um 90° (aus der Zeichnungsebene nach hinten) in die Stellung D erreicht die Tischplatte ihre horizontale Ge-brauchsstellung. Durch Verschieben der Tischplatte in der Führung 6 (hier mit Volllinien angedeutet) der Profilkralle in Pfeilrichtung 4 kann der Klapptisch und seine Position dem Bedarf des Benutzers angepasst werden.

Der Abbau des Tisches erfolgt in umgekehrter Reihenfolge. Zunächst wird die Tischplatte in Stellung D innerhalb der Profilkralle 9 entgegen der Pfeilrichtung 4 (in der Zeichnung) nach links verschoben, bis ein Anschlag an der Tischplatte erreicht ist und anschließend nach oben in die Stellung C verschwenkt. Sodann wird die Tischplatte aus der Stellung C um die Drehachse 5 um 90° nach oben bewegt, bis sie die Stellung B erreicht hat. Durch Absenken der Platte innerhalb der Profilkralle 9 entgegen der Pfeilrichtung 1 gelangt sie in die Ruhestellung A unterhalb der Öffnung X, beispielsweise einer Multifunktionsbox.

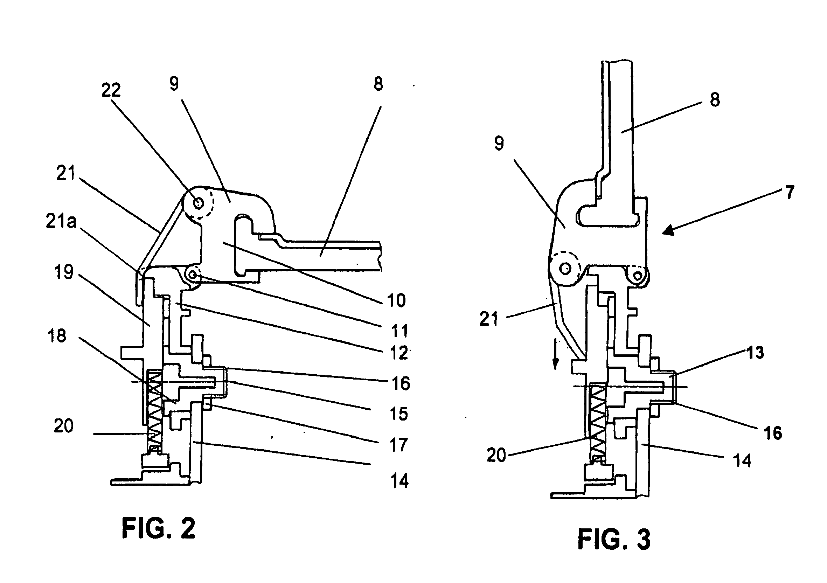

Ein Schwenkscharnier zur erfindungsgemäßen Verwendung ist schematisch in den Figuren 2 und 3 dargestellt. Die Figuren unterscheiden sich lediglich durch die Schwenkstellung der Tischplatte 8, die in Figur 2 horizontal und in Figur 3 vertikal geschwenkt ist. Die Tischplatte 8 wird in der Profilkralle 9 eingespannt gehalten und ist in dieser senkrecht zur Zeichnungsebene verschiebbar geführt. Außerdem ist die hier mit 8 bezeichnete Tischplatte um eine zu der von der Profilkralle umfassten Tischkante 10 parallel verlaufende Schwenkachse 11 in die vertikale Stellung verschwenkbar, die in Fig. 3 dargestellt ist. Die Schwenkachse 11 verbindet die beiden Teile des Schwenkscharniers 7, dessen eines Teil durch die Profilkralle selbst gebildet wird und dessen anderes Teil zu an dem mit 12 bezeicheten topfförmigen Drehteil angeformt ist, welches um die in der Zeichnungsebene quer zur Schwenkachse 11 horizontal verlaufende Drehachse 15 verdrehbar ist. Das Drehteil ist in einem festen Teil 18 gelagert, das mit dem bei 14 angedeuteten Gehäuse fest verbunden ist. Das feste Teil 18 ist im Wesentlichen scheibenförmig ausgebildet und durchgreift mit einem angeformten Zapfen 13 das drehende Teil 12. Der Zapfen 13 trägt ein Gewinde 16, auf das die Mutter 17 zur axialen Befestigung des drehenden Teils 12 der Drehvorrichtung auf dem festen Teil 18 aufgeschraubt ist. Innerhalb des festen Teils 18 der Drehvorrichtung ist der bei 19 dargestellte Riegel in seiner Längsrichtung bewegbar und wird von der Feder 20 gegen die Innenseite des topfförmig gestalteten drehenden Teiles 12 gepresst. Dort ist eine Ausnehmung derartig positioniert angebracht, dass der Riegel in der der Gebrauchsstellung des Tisches entsprechenden Schwenkstellung des Schwenkscharniers dort einrastet und das Schwenkscharnier in dieser Position festsetzt. Das Schwenkscharnier selbst wird von dem Zugblech 21 abgedeckt, das bei 22 an der Profilkralle 9 gehalten ist. Das Zugblech 21 dient als Widerlager für den frei auskragenden Klapptisch, indem das Zugblech in die bei 21a angedeuteten Nocken einhakt, die am Teil 12 ausgebildet sind. Die Nocken 21a durchdringen Öffnungen in Zugblech 21 in der Gebrauchsstellung des Tisches und halten ihn dadurch in Position, dass das Zugblech sich selbsttätig unter den Nocken festhakt. Die Nocken sind an ihrer nach oben gerichteten Seite so geformt, dass bei Hochklappen der Tischplatte 8 das Zugblech über die Nocken geschoben und dabei gelöst wird. Während der weiteren Bewegung der Tischplatte nach oben drückt das Zugblech den Riegel 19 nach unten, indem es auf dem Vorsprung am Riegel 19 aufsetzt, so dass der Riegel 19 gegen die Feder 20 nach unten gedrückt und von dem drehenden Teil 12 gelöst wird, sobald die Tischplatte 8 ihre vertikale Stellung erreicht hat. Erst in dieser Stellung kann die Verschwenkbewegung um die Achse 15 eingeleitet werden, mit der die Tischplatte in ihre Ruheposition versenkt werden kann.

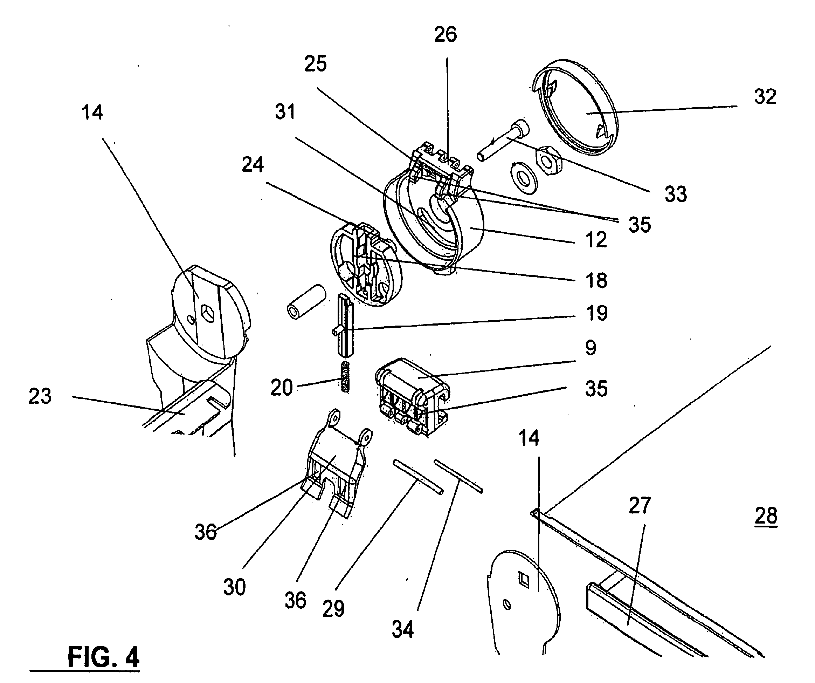

Zur Verdeutlichung des Aufbaus der Erfindung sind die Einzelteile der erfindungsgemäßen Vorrichtung in Figur 4 in einer Explosionsdarstellung gezeigt. Erkennbar wird an dem Gehäuseteil 14, das an dem eine Multifunktionsbox verstärkenden Rahmen 23 ausgeführt ist, das feste Teil 18 des Drehteiles befestigt. Teil 18 durchgreift mit einem bei 24 erkennbaren Zapfen den topfförmig ausgebildeten drehbaren Teil 12, der vordere Teil des Zapfens durchdringt sodann die im Teil 14 erkennbare abgeflachte Bohrung von links nach rechts und wird auf der abgewandten Seite durch die erkennbare nicht näher bezeichnete Mutter gehalten. Ein Riegel 19 mit der Feder 20 ist im festen Teil 18 in seiner Längsrichtung geführt, und greift in einer bestimmten Drehstellung des drehbaren Teils in eine Ausnehmung 25 am Teil 12.

Die bei 33 gezeichnete Schraube durchdringt das topfförmige drehende Teil 12 im Bereich einer im Boden in Umfangsrichtung verlaufenden Nut 31 und bildet beim Verdrehen des drehenden Teiles 12 eine Endanschlag für die Drehbewegung auf beiden Seiten der Nut. Die Profilkralle 9 bildet den einen Teil des in den Figuren 2 und 3 erkennbaren Schwenkscharniers, dessen anderer Teil an dem drehenden Teil 12 angeformt ist, wie bei 26 erkennbar. Die beiden Scharnierteile werden durch die Achse 34 zusammengehalten.

Erkennbar ist die Profilkralle 9 im Querschnitt C-förmig gestaltet und umgreift das Profil 27 am Klapptisch 28. Der Klapptisch 28 ist in dem dargestellten Beispiel mit einer dünnen Platte auf einem stabilen Rahmen dargestellt, kann aber genauso gut auch aus einer einteiligen Formplatte bestehen. Zwischen der Profilkralle 9 und Profil 27 ist ein ausreichendes Spiel vorhanden, um die Verschiebung des Tisches 28 in Längsrichtung entlang des Profils 27 zu ermöglichen. Das Zugblech, das als Widerlager für den frei auskragenden Klapptisch dient, ist bei 30 gezeichnet. Das Zugblech 30 ist um die Achse 29 schwenkbar an der Profilkralle 9 gelagert und übergreift im montierten Zustand den am drehenden Teil 12 angeformten Teil 26 des Schwenkscharniers. An diesem Teil 26 sind auch zwei Nocken 35 angeformt, die im Gebrauchszustand des Tisches 28 die Öffnungen 36 im Zugblech 30 durchdringen, wobei das Zugblech 30 sich mit den Nocken 35 verhakt, wie zur Figur 2 beschrieben. Im aufgestellten Zustand des Tisches 28 wird das Zugblech 30 nach unten bewegt, so dass die Ausnehmung 37 den Vorsprung 38 am Riegel 19 gegen die Wirkung der Feder 20 nach unten drückt und den Riegel 19 aus der Ausnehmung 25 am Teil 12 herausdrückt. Die Drehvorrichtung wird auf der Außenseite durch den Deckel 32 abgedeckt, auf der Innenseite wird die Drehvorrichtung von der Abdeckung 14 verschlossen.

### Bezugszeichenliste:

- 1: Ausfahrrichtung zum Aufbau
- 2: Drehrichtung beim Schwenken
- 3: Klapprichtung in die Horizontale
- 4: Verschieberichtung
- 5: Drehachse
- 6: Führung
- 7: Schwenkscharnier
- 8: Tischplatte
- 9: Profilkralle
- 10: Kante
- 11: Schwenkachse
- 12: drehendes Teil
- 13: Zapfen
- 14: Gehäuse
- 15: Drehachse
- 16: Gewinde
- 17: Mutter
- 18: fester Teil
- 19: Riegel
- 20: Feder
- 21: Zugblech
- 22: Befestigung für Zugblech
- 23: Rahmen
- 24: Zapfen
- 25: Ausnehmung
- 26: Teil des Schwenkscharniers
- 27: Profil
- 28: Klapptisch
- 29: Achse für Zugblech
- 30: Zugblech
- 31: Nut
- 32: Deckel
- 33: Schraube
- 34: Scharnierachse
- 35: Nocken
- 36: Öffnung im Zugblech
- 37: Ausnehmung am Zugblech
- 38: Vorsprung am Riegel

## Patentansprüche

1. Klapptischanordnung für Fahrzeuge, bei der der Klapptisch (28) aus einer vertikal orientierten Ruhelage, insbesondere innerhalb einer Multifunktionskonsole zwischen den äußeren Fondsitzen eines Personenkraftwagens herausziehbar und in seine horizontal orientierte Gebrauchslage klappbar ist, **gekennzeichnet durch** ein Schwenkscharnier, bestehend aus einer den Kantenbereich der Tischplatte (8) umgreifenden Profilkralle (9), die um eine parallel zu der von der Profilkralle (9) umgriffenen Kante (10) orientierte Schwenkachse (11,34) um einen Winkel von etwa 90° verschwenkbar an einer Drehvorrichtung befestigt ist, mit deren Hilfe die Profilkralle (9)zusammen mit der Tischplatte (28) um eine quer zu der Schwenkachse (11,34) der Profilkralle (9) orientierte, im Wesentlichen horizontale Drehachse (15), um einen Drehwinkel von etwa 90° verdrehbar ist.

2. Klapptischanordnung nach Anspruch 1, **dadurch gekennzeichnet, dass** die Tischplatte (28) innerhalb der Profilkralle (9)und parallel zu der Schwenkachse (11,34) zwischen zwei Endstellungen stufenlos.verschiebbar ist.

3. Klapptischanordnung nach Anspruch 1 und 2, **dadurch gekennzeichnet, dass** die Drehvorrichtung aus zwei koaxial angeordneten Teilen (12,18) besteht, von denen das eine Teil (18) an einem mit dem Fahrzeug verbundenen Rahmen (23) befestigt ist und das andere Teil (12) gegenüber dem festen (18) Teil um die gemeinsame horizontale Mittelachse (15) verdrehbar ist, wobei die Verdrehbewegung des verdrehbaren Teils (12) durch Endanschläge in dem festen Teil (18) begrenzt ist.

4. Klapptischanordnung nach Anspruch 1, **dadurch gekennzeichnet, dass** das verdrehbare Teil (12) topfförmig ausgebildet ist, und mit seinem Innenumfang am Außenumfang des im Wesentlichen scheibenförmigen festen Teils (18) und/oder an einem am festen Teil ausgebildeten zentralen, das verdrehbare Teil durchdringenden Zapfen (13) geführt ist.

5. Klapptischanordnung nach Anspruch 1, **dadurch gekennzeichnet, dass** am äußeren Umfang des verdrehbaren Teils (12) der eine Teil (26) des gemeinsam mit der Profilkralle (9) gebildeten Schwenkscharniers ausgebildet ist und bodenseitig des topfförmigen festen Teiles (18) eine zur Drehachse mit konstantem radialen Abstand orientierte Nut (31) vorgesehen ist, deren Umfangserstreckung dem Drehwinkel des verdrehbaren Teils (12) entspricht und die von einem am feste Teil vorgesehenen Zapfen (Schraube 33) dergestalt durchdrungen wird, so dass der Zapfen (Schraube 33) mit den Enden der Nut (31) die beiden Endanschläge für die Verdrehbewegung des verdrehbaren Teils (12) bilden.

6. Klapptischanordnung nach Anspruch 1, **dadurch gekennzeichnet, dass** am festen (18) oder am beweglichen Teil (12) eine radial gegen Federdruck (20) verschiebbare Sperre (Riegel 19) vorgesehen ist, die in eine entsprechende Ausnehmung (25) am jeweils anderen Teil (12 oder 18) blockierend einrastet, sobald die Drehvorrichtung eine vorgegebene Verdrehstellung erreicht hat.

7. Klapptischanordnung nach Anspruch 1, **dadurch gekennzeichnet, dass** an der Profilkralle (9) um eine parallel zur Schwenkachse (11,34) verlaufende Achse (29) ein Zugblech (30) gelenkig gelagert ist, dass das Schwenkscharnier (7) übergreifend in den Bereich der Drehvorrichtung ragt, wo sich das Zugblech (30) in der Gebrauchsstellung des Tisches (28) mit einem an der Drehvorrichtung vorgesehen Widerlager verhakt und dabei ein Zugglied als Widerlager für den Klapptisch (28) bildet.

8. Klapptischanordnung nach Anspruch 1, **dadurch gekennzeichnet, dass** das Zugblech (30) mindestens eine Ausnehmung (36) aufweist, die einen am Drehteil oder an der dem Drehteil zugeordneten Hälfte (26) des Schwenkscharniers ausgebildeten Nocken (35) hintergreift, sobald der Klapptisch (28) in seine Gebrauchslage geklappt ist.

9. Klapptischanordnung nach Anspruch 1, **dadurch gekennzeichnet, dass** das Zugblech (30) beim Anheben des Tisches (28) über eine an dem Nocken (35) ausgebildete Führungsfläche aus seiner Verriegelungsstellung bewegt ist.

10. Klapptischanordnung nach Anspruch 1, **dadurch gekennzeichnet, dass** durch das Zugblech (30) beim Hochschwenken des Tisches (28) die radial gegen Federdruck (20) verschiebbare Sperre (Riegel 19) entriegelbar ist.

11. Klapptischanordnung nach Anspruch 1, **dadurch gekennzeichnet, dass** das Schwenkscharnier (7) an einer Multifunktionsbox zwischen zwei Sitzen eines Personenkraftwagens angeordnet ist und die Tische (28) zwischen dem Gehäuse der Multifunktionsbox und einem innerhalb der Multifunktionsbox gebildeten Fach, vorzugsweise Kühlfach in vertikaler Stellung versenkbar sind.

12. Klapptischanordnung nach Anspruch 1, **dadurch gekennzeichnet, dass** die Multifunktionsbox zwischen den äußeren Fondsitzen eines Personenkraftwagens angeordnet ist und die Tische (28) nach Öffnen der die Multifunktionsbox verschließenden Armlehne herausbewegbar sind.

13. Klapptischanordnung nach Anspruch 1, **dadurch gekennzeichnet, dass** jeder der Tische (28) zweigeteilt ist und durch einen Klappmechanismus in eine der Ruhestellung entsprechende Stellung verbringbar sind, in der die Tischhälften dicht aufeinander liegend, einklappbar sind.

## Claims

1. A folding table arrangement for vehicles, wherein the folding table (28) is adapted to be withdrawn from a vertically oriented rest position, in particular within a multi-function console between the outer rear seats of a passenger motor vehicle, and folded into its horizontally oriented position of use, **characterized by** a swivel hinge consisting of a profile claw (9) which grips the edge portion of the table top (8) and is fixed to a rotating device such that it is adapted to be swung through an angle of approximately 90° about a pivotal axis (11, 34) oriented in parallel with the edge (10) gripped by the profile claw (9), the profile claw (9) together with the table top (28) being adapted to be rotated through an angle of rotation of approximately 90° about a substantially horizontal axis of rotation (15) oriented transversely of the pivotal axis (11, 34) of the profile claw (9) with the assistance of said rotating device.

2. A folding table arrangement in accordance with Claim 1, **characterised in that** the table top (28) is continuously displaceable within the profile claw (9) between two end positions and parallel to the pivotal axis (11, 34).

3. A folding table arrangement in accordance with Claim 1 and 2, **characterised in that** the rotating device consists of two coaxially arranged parts (12, 18), of which the one part (18) is fixed to a framework (23) connected to the vehicle and the other part (12) is rotatable with respect to the fixed (18) part about the common horizontal central axis (15), wherein the rotary movement of the rotatable part (12) is limited by end stop members in the fixed part (18).

4. A folding table arrangement in accordance with Claim 1, **characterised in that** the rotatable part (12) is pot shaped and is guided by the inner periphery thereof on the outer periphery of the substantially disk-shaped fixed part (18) and/or on a central spigot (13) which is formed on the fixed part and projects through the rotatable part.

5. A folding table arrangement in accordance with Claim 1, **characterised in that** the one part (26) of the swivel hinge formed together with the profile claw (9) is formed on the outer periphery of the rotatable part (12) and a groove (31) oriented at a constant radial spacing from the axis of rotation is provided at the bottom of the pot shaped fixed part (18), the peripheral extent of said groove corresponding to the angle of rotation of the rotatable part (12) and said groove being penetrated by a spigot (screw 33) that is provided on the fixed part in such a manner that the spigot (screw 33) with the ends of the groove (31) form the two end stop members for the rotary movement of the rotatable part (12).

6. A folding table arrangement in accordance with Claim 1, **characterised in that** a locking member (latch 19) is provided on the fixed (18) or on the moveable part (12), said member being radially displaceable against spring pressure (20) and engaging in blocking manner in a corresponding recess (25) in the other respective part (12 or 18) as soon as the rotating device has reached a given rotational position.

7. A folding table arrangement in accordance with Claim 1, **characterised in that** a draw plate (30) is mounted on the profile claw (9) and articulated about a pivot (29) extending in parallel with the pivotal axis (11, 34) and it projects into the region of the rotating device overlapping the swivel hinge (7) whereat the draw plate (30) hooks onto a counter support provided on the rotating device in the usage position of the table (28) and thereby forms a brace serving as a counter support for the folding table (28).

8. A folding table arrangement in accordance with Claim 1, **characterised in that** the draw plate (30) comprises at least one recess (36) which engages behind a cam (35) formed on the rotary part or on the half (26) of the swivel hinge that is associated with the rotary part as soon as the folding table (28) is folded into its position of use.

9. A folding table arrangement in accordance with Claim 1, **characterised in that** the draw plate (30) is moved from its locked position over a guidance surface formed on the cam (35) when the table (28) is raised.

10. A folding table arrangement in accordance with Claim 1, **characterised in that** the locking member (latch 19) that is radially displaceable against spring pressure (20) is adapted to be released by the draw plate (30) when swinging the table (28) upwards.

11. A folding table arrangement in accordance with Claim 1, **characterised in that** the swivel hinge (7) is arranged on a multi-function box between two seats in a passenger motor vehicle and the tables (28) are adapted to be lowered in a vertical position between the housing of the multi-function box and a compartment, preferably a cooling compartment, formed within the multi-function box.

12. A folding table arrangement in accordance with Claim 1, **characterised in that** the multi-function box is arranged between the outer rear seats of a passenger motor vehicle and the tables (28) are movable out therefrom after the arm rest closing the multi-function box has been opened.

13. A folding table arrangement in accordance with Claim 1, **characterised in that** each of the tables (28) is formed in two parts and are adapted to be folded by a folding mechanism into a position corresponding to the rest position wherein the table halves lie closely against one another.

## Revendications

1. Agencement de tablette pliante pour véhicules, pour lequel la tablette pliante (28) est extractible d'une position de repos orientée verticalement, en particulier à l'intérieur d'une console multifonction, entre les sièges arrière extérieurs d'une voiture particulière, et est rabattable à sa position d'utilisation orientée horizontalement, **caractérisé par** une charnière de pivotement, formée d'une griffe profilée (9) entourant la zone d'arêtes du panneau de table (8), la griffe étant fixée sur un dispositif de rotation avec possibilité de pivoter d'un angle d'environ 90°, autour d'un axe de pivotement (11, 34) orienté parallèlement à l'arête (10) entourée par la griffe profilée (9), dispositif de rotation à l'aide duquel la griffe profilée (9), conjointement avec le panneau de table (28), est susceptible de tourner d'un angle de rotation d'environ 90°, autour d'un axe de rotation (15) sensiblement horizontal, orienté transversalement par rapport à l'axe de pivotement (11, 34) de la griffe profilée (9).

2. Agencement de tablette pliante selon la revendication 1, **caractérisé en ce que** le panneau de table (28) est susceptible d'être coulissé, de façon progressive et continue, entre deux positions finales à l'intérieur de la griffe profilée (9) et parallèlement à l'axe de pivotement (11, 34).

3. Agencement de tablette pliante selon la revendication 1 et 2, **caractérisé en ce que** le dispositif de rotation est composé de deux parties (12, 18) disposées coaxialement, dont la première partie (18) est fixée sur un cadre (23) relié au véhicule et l'autre partie (12) est susceptible de tourner par rapport à la partie fixe (18), autour de l'axe central (15) horizontal commun, le mouvement de rotation de la partie rotative (12) étant limité par des butées de fin de course, placées dans la partie fixe (18).

4. Agencement de tablette pliante selon la revendication 1, **caractérisé en ce que** la partie tournante (12) est configurée en forme de pot et est guidée par sa périphérie intérieure sur la périphérie extérieure de la partie fixe (18) sensiblement en forme de disque et/ou sur un tourillon (13) central, réalisé sur la partie fixe et traversant la partie tournante.

5. Agencement de tablette pliante selon la revendication 1, **caractérisé en ce que**, sur la périphérie extérieure de la partie tournante (12), est réalisée une partie (26) de la charnière de pivotement, formée conjointement avec la griffe profilée (9), et, du côté du fond de la partie fixe (18) en forme de pot, est prévue une rainure (31) orientée avec un espacement radial constant par rapport à l'axe de rotation, rainure dont l'étendue périphérique correspond à l'angle de rotation de la partie tournante (12) et qui est traversée par un tourillon (vis 33) prévu sur la partie fixe, de manière que le tourillon (vis 33), avec les extrémités de la rainure (31), forment les deux butées de fin de course du mouvement de rotation de la partie tournante (12).

6. Agencement de tablette pliante selon la revendication 1, **caractérisé en ce que**, sur la partie fixe (18) ou la partie mobile (12), est prévu un blocage (verrou 19), susceptible de coulisser radialement à l'encontre d'une pression élastique (20), blocage s'encliquetant, avec effet de blocage, dans un évidement (25) correspondant situé chaque fois sur l'autre partie (12 ou 18), dès que le dispositif de rotation a atteint une position de rotation prédéterminée.

7. Agencement de tablette pliante selon la revendication 1, **caractérisé en ce que**, sur la griffe profilée (9), autour d'un axe (29) s'étendant parallèlement à l'axe de pivotement (11, 34), est montée de façon articulée une tôle de traction (30) qui, en entourant la charnière de pivotement (7), pénètre dans la zone du dispositif de rotation, où la tôle de traction (30) s'accroche, en position d'utilisation de la table (28), avec un contre-palier prévu sur le dispositif de rotation et forme alors un organe de traction faisant office de contre-palier pour la table pliante.

8. Agencement de tablette pliante selon la revendication 1, **caractérisé en ce que** la tôle de traction (30) présente au moins un évidement (36), saisissant par l'arrière un ergot (35) réalisé sur la partie tournante ou sur la moitié (26), associée à la partie tournante, de la charnière de pivotement, dès que la table pliante (28) a été rabattue à sa position d'utilisation.

9. Agencement de tablette pliante selon la revendication 1, **caractérisé en ce que**, lors du soulèvement de la table (28), la tôle de traction (30) est déplacée de sa position de verrouillage, sur une surface de guidage réalisée sur l'ergot (35).

10. Agencement de tablette pliante selon la revendication 1, **caractérisé en ce que** le blocage (verrou 19), déplaçable radialement à l'encontre d'une force élastique (20), est déverrouillable au moyen de la tôle de traction (30), lors du relèvement par pivotement de la table (28).

11. Agencement de tablette pliante selon la revendication 1, **caractérisé en ce que** la charnière de pivotement (7) est disposée sur un boîtier multifonction, entre deux sièges d'une voiture particulière, et les tables (28) sont escamotables en position verticale, entre le boîtier de la boîte multifonction et un compartiment formé à l'intérieur de la boîte multifonction, de préférence un compartiment de réfrigération.

12. Agencement de tablette pliante selon la revendication 1, **caractérisé en ce que** la boîte multifonction est disposée entre les sièges arrière extérieurs d'une voiture particulière et les tables (28) sont extractibles après ouverture de l'accoudoir fermant la boîte multifonction.

13. Agencement de tablette pliante selon la revendication 1, **caractérisé en ce que** chacune des tables (28) est divisée en deux et peut être placée en une position correspond à la position de repos, au moyen d'un mécanisme de rabattement, position de repos dans laquelle les moitiés de table peuvent être rabattues, en étant placées horizontalement très près l'une sur l'autre.
